# DEMANDE DE BREVET EUROPEEN

(11) **EP 2 000 701 A1**
(43) Date de publication de la demande: **10.12.2008**
(21) Numéro de dépôt: 08157015.2
(22) Date de dépôt: 27.05.2008
(51) Int. Cl.: F16F 15/14

(54) **Dispositif de réduction d'acyclismes d'un volant d'inertie**

(30) Priorité: 08.06.2007 FR 0755623
(71) Demandeur: PEUGEOT CITROËN AUTOMOBILES S.A., 78140 Vélizy Villacoublay (FR)
(72) Inventeur: Orsat, Sébastien, 92500 Rueil-Malmaison (FR)
(74) Mandataire: Ménès, Catherine

(57) **Abrégé**

Dispositif de réduction d'acyclismes d'un volant (10) d'inertie, ledit dispositif comprenant au moins un élément pendulaire (20) comportant au moins un évidement (21, 22), et une pièce (11, 12) de liaison entre ledit volant (10) d'inertie et ledit élément pendulaire (20), disposée à l'intérieur dudit évidement (21, 22).

Selon l'invention, ladite pièce (11, 12) de liaison présente un profil apte à réaliser un contact surfacique avec ledit évidement (21, 22).

Application à la réduction des acyclismes à bas régime des moteurs à combustion interne.

## Description

La présente invention concerne un dispositif de réduction d'acyclismes d'un volant d'inertie.

L'invention s'applique plus particulièrement à la réduction des acyclismes à bas régime des moteurs à combustion interne.

On entend par « acyclismes » les successions de ralentissements et d'accélérations de la vitesse de rotation du vilebrequin des moteurs à combustion interne dont les effets se font sentir surtout aux bas régimes moteur.

La diminution de la vitesse de rotation du vilebrequin lorsque le moteur tourne au ralenti est justifiée par la recherche d'une limitation de la pollution et de la consommation des véhicules en milieu urbain.

Afin de réduire l'acyclisme au ralenti, une solution couramment utilisée est d'augmenter l'inertie de l'arbre moteur en fixant un volant d'inertie à l'extrémité du vilebrequin.

Cependant, cette solution connue présente de nombreux inconvénients, à savoir, une augmentation pénalisante de la masse du groupe moto-propulseur, une augmentation nécessaire du démarreur, et une diminution des performances du moteur dont les montées en vitesse deviennent plus lentes.

Pour remédier à ces inconvénients, il a été proposé dans la demande de brevet français n ° 2 781 031 d'associer des éléments pendulaires au volant d'inertie dans le but d'obtenir un dispositif ayant le double avantage, d'une part de réduire les acyclismes, et d'autre part de présenter un moment d'inertie plus faible pour le moteur du fait de la possibilité d'utiliser d'un volant d'inertie de masse plus faible.

Le principe d'un tel dispositif de réduction des acyclismes est le suivant. A la périphérie du volant d'inertie sont disposés un ou plusieurs éléments pendulaires qui présentent un degré de liberté dans le sens de la rotation du volant. Lorsque le volant tourne, lesdits éléments pendulaires acquièrent un moment cinétique qui est principalement fonction de la masse m des éléments pendulaires et la distance R de leur point de liaison sur le volant à l'axe de rotation du volant. Si la vitesse de rotation du volant d'inertie diminue à la suite d'un acyclisme, les éléments pendulaires transfèrent au volant, par effet d'inertie, un moment cinétique qui vient s'ajouter à celui du volant et donc compense le ralentissement de la rotation du volant. Au contraire, si la vitesse de rotation du volant d'inertie s'accélère, l'inertie des éléments pendulaires se traduit par un transfert au volant d'un moment cinétique qui se retranche à celui du volant et compense ainsi l'accélération de la rotation du volant. La valeur du moment cinétique positif ou négatif additionnel dépend de la longueur L du pendule équivalent aux éléments pendulaires.

Le temps de réponse d'un élément pendulaire à un acyclisme est déterminé par les trois paramètres définis plus haut, à savoir la masse m et les distances R et L. Aussi, ces trois paramètres sont avantageusement choisis de manière à accorder la fréquence propre d'oscillation des éléments pendulaires aux harmoniques majeures des acyclismes, ce qui rend particulièrement efficace l'effet de compensation du dispositif pendulaire de réduction des acyclismes. A titre d'exemple, pour un moteur alternatif à quatre temps et quatre cylindres en ligne, l'harmonique majeure a une fréquence correspondant à deux fois la vitesse de rotation. Un tel moteur équipé d'un dispositif pendulaire accordé par exemple sur l'harmonique H2 permet de combattre la totalité de cet harmonique et peut tourner à ce régime sans irrégularités gênantes et avec un volant d'inertie allégé par rapport à ceux utilisés auparavant. En pratique, il est toutefois préférable d'accorder le pendule sur un harmonique légèrement supérieur au H2 afin d'éviter que le déplacement du pendule ne soit trop important, un débattement toujours inférieur à 30° étant typiquement considéré comme acceptable.

La réalisation des éléments pendulaires et leurs moyens de liaison au volant d'inertie peuvent être très variés.

La demande de brevet français n ° 2 781 031 précitée propose un système de masselottes mobiles à l'intérieur d'évidements circulaires régulièrement répartis à la périphérie du volant d'inertie.

Dans le brevet britannique n° 598811 est décrit un dispositif dans lequel l'élément pendulaire est une masse oscillante reliée au volant par une liaison pivotante constituée par un axe traversant un premier évidement pratiqué dans le volant d'inertie et un deuxième évidement pratiqué dans ladite masse oscillante. En pratique, les deux évidements sont des alésages dont le diamètre est supérieur au diamètre de l'axe de liaison de manière à permettre un mouvement relatif de l'axe à l'intérieur des alésages.

Toutefois, cette dernière réalisation présente un inconvénient lié à la nature du contact entre les axes de liaison et les alésages. En effet, ce contact est linéique, c'est-à-dire qu'il porte seulement sur une génératrice des surfaces cylindriques constituant l'axe et les alésages. Il n'offre donc que très peu de surface pour reprendre l'effort de centrifugation appliqué à la masse de l'élément pendulaire. Or, ce type d'effort peut devenir très important lorsque la masse, la vitesse de rotation et la distance R deviennent suffisamment grands.

Aussi, un but de la présente invention est de proposer un dispositif de réduction d'acyclismes d'un volant d'inertie, ledit dispositif comprenant au moins un élément pendulaire comportant au moins un évidement, et une pièce de liaison entre ledit volant d'inertie et ledit élément pendulaire, disposée à l'intérieur dudit évidement, qui permettrait de limiter les efforts de centrifugation sur ladite pièce de liaison et sur l'élément pendulaire.

Ce but est atteint, conformément à l'invention, du fait que ladite pièce de liaison présente un profil apte à réaliser un contact surfacique avec ledit évidement.

Ainsi, la surface de contact entre l'élément pendulaire et la pièce de liaison étant plus grande, on limite les pressions appliquées par les pièces les unes sur les autres.

En particulier, l'invention prévoit que, ledit évidement comportant une zone de contact de forme circulaire, ladite pièce de liaison présente un profil de forme circulaire conjuguée de la forme circulaire de ladite zone de contact de l'évidement.

Avantageusement, ladite pièce de liaison est réalisée dans un matériau auto-lubrifiant. Cette disposition permet de réduire les frottements entre les pièces au niveau de la surface de contact.

L'invention a également pour objet un moteur d'un véhicule automobile dont l'équipage mobile comporte un arbre associé à un volant muni d'un dispositif de réduction des acyclismes tel que défini précédemment.

La description qui va suivre en regard du dessin annexé, donné à titre d'exemple non limitatif, fera bien comprendre en quoi consiste l'invention et comment elle peut être réalisée.

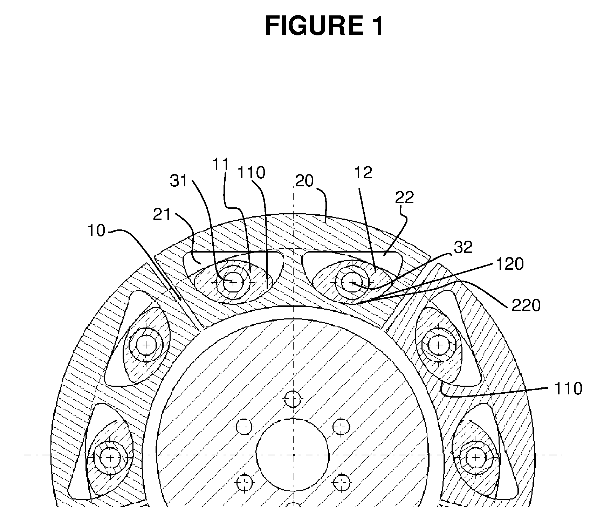

La figure 1 est une vue de face d'un dispositif de réduction d'acyclismes conforme à l'invention.

Sur la figure 1 est représenté un volant 10 d'inertie destiné à être fixé à une extrémité du vilebrequin d'un moteur à combustion interne. Ce volant 10 d'inertie comporte un dispositif pour réduire les acyclismes du moteur lorsqu'il tourne au ralenti.

A cet effet, le dispositif de réduction des acyclismes comprend au moins un élément pendulaire 20 de masse m présentant ici deux évidements 21, 22. Par ailleurs, deux pièces 11, 12 de liaison sont montées pivotantes respectivement autour d'axes 31, 32 qui, dans l'exemple de réalisation de la figure 1, sont des pions intégrés au volant 10 ou des pièces supplémentaires venant s'assembler dans le corps du volant. Les pièces 11, 12 peuvent donc tourner librement autour de l'axe 31, 32 respectif de manière à accompagner le mouvement relatif de translation de l'élément pendulaire 20 par rapport au volant 10.

Les pièces 11, 12 de liaison sont disposées respectivement à l'intérieur des évidements 21, 22, de sorte que, lors d'une accélération ou d'un ralentissement de la vitesse de rotation du vilebrequin, l'élément pendulaire 20 puisse communiquer au volant 10 un moment cinétique de compensation d'acyclisme. Ce transfert résulte de l'inertie de rotation de l'élément pendulaire 20 autour de l'axe du volant 10 et du mouvement relatif de translation effectué par l'élément pendulaire 20.

Comme on peut le voir sur la figure 1, les évidements 21, 22 comportent respectivement une zone 220 de contact de forme circulaire, de même que les pièces 11, 12 de liaison présentent un profil respectif 110, 120 de forme également circulaire, conjuguée de la forme circulaire des zones 220 de contact.

On obtient ainsi que le contact entre les pièces 11, 12 de liaison et les évidements 21, 22 se répartit sur une surface bien plus grande que dans le cas du contact linéique décrit plus haut en référence à l'état de la technique. Cette surface est suffisante pour reprendre les efforts appliqués sur ces pièces sans que les pressions de contact entre les pièces ne deviennent critiques.

Afin de limiter les frottements entre les pièces 11, 12 de liaison et les évidements 21, 22, il est prévu que lesdites pièces de liaison sont réalisées dans un matériau auto-lubrifiant.

On remarquera un autre avantage du dispositif de l'invention qui réside dans le fait que les distances fonctionnelles R et L ne portent chacune que sur une seule pièce. La tolérance de dimensionnement géométrique n'est donc plus répartie sur plusieurs pièces, mais porte sur une seule. II en résulte des intervalles de tolérance moins contraignants sur chaque pièce. En l'espèce, la distance R se retrouve uniquement sur le volant 10, tandis que le distance L se retrouve sur les pièces 11, 12 de liaison.

## Revendications

1. Dispositif de réduction d'acyclismes d'un volant (10) d'inertie, ledit dispositif comprenant au moins un élément pendulaire (20) comportant au moins un évidement (21, 22), et une pièce (11, 12) de liaison entre ledit volant (10) d'inertie et ledit élément pendulaire (20), disposée à l'intérieur dudit évidement (21, 22), **caractérisé en ce que** ladite pièce (11, 12) de liaison présente un profil apte à réaliser un contact surfacique avec ledit évidement (21, 22).

2. Dispositif selon la revendication 1, dans lequel ledit évidement (21, 22) comportant une zone (220) de contact de forme circulaire, ladite pièce (11, 12) de liaison présente un profil (110, 120) de forme circulaire conjuguée de la forme circulaire de ladite zone de contact de l'évidement.

3. Dispositif selon l'une des revendications 1 ou 2, dans lequel ladite pièce (11, 12) de liaison est montée pivotante autour d'un axe (31, 32) solidaire du volant (10) d'inertie.

4. Dispositif selon l'une quelconque des revendications 1 à 3, dans lequel ladite pièce (11, 12) de liaison est réalisée dans un matériau auto-lubrifiant.

5. Moteur d'un véhicule automobile dont l'équipage mobile comporte un arbre associé à un volant muni d'un dispositif de réduction des acyclismes selon l'une quelconque des revendications 1 à 4.

6. Moteur selon la revendication 5, **caractérisé en ce** l'élément pendulaire est choisi accordé sur un harmonique légèrement supérieur à l'harmonique H2.
